# EUROPÄISCHE PATENTSCHRIFT

(11) **EP 1 448 297 B1**
(45) Veröffentlichungstag und Bekanntmachung des Hinweises auf die Patenterteilung: **16.03.2016**
(21) Anmeldenummer: 02803008.8
(22) Anmeldetag: 12.11.2002
(51) Int. Cl.: B01J 20/30

(54) **Verfahren zur Reduktion des Ligand-Leakage von Affinitätschromatographie-Matrices**
Method for Reducing Ligand-leakage from Affinity Chromatography Matrices
Procédé de réduction de la fuite de ligands de matrices de chromatographie d'affinité

(30) Priorität: 15.11.2001 DE 10155984
(43) Veröffentlichungstag der Anmeldung: 25.08.2004
(73) Patentinhaber: Boehringer Ingelheim Pharma GmbH & Co. KG, 55216 Ingelheim am Rhein (DE)
(72) Erfinder: HALMER, Lothar, 88400 Biberach an der Riss (DE); HOLZER, Margit, 54130 Dommartement (FR)
(86) Internationale Anmeldenummer: PCT/EP2002/012594
(87) Internationale Veröffentlichungsnummer: WO 2003/041859

(56) Entgegenhaltungen:
- EP-A- 0 105 736
- EP-A- 0 345 549
- WO-A-94/28118
- "Streamline rProtein A" , AMERSHAM PHARMACIA BIOTECH , UPPSALA, SWEDEN XP002233246 in der Anmeldung erwähnt Seite 5, rechte Spalte
- LIHME A ET AL: "Divinilsulphone-activated agarose. Formation of stable and non-leaking affinity matrices by immobilization of immunoglobulins and other proteins" JOURNAL OF CHROMATOGRAPHY, BIOMEDICAL APPLICATIONS, ELSEVIER SCIENCE PUBLISHERS B.V. AMSTERDAM, NL, Bd. 376, 1986, Seiten 299-305, XP002122286
- DATABASE COMPENDEX [Online] ENGINEERING INFORMATION, INC., NEW YORK, NY, US; FAHRNER ROBERT L ET AL: "Expanded bed protein A affinity chromatography of a recombinant humanized monoclonal antibody: process development, operation, and comparison with a packed bed method" Database accession no. E2000345233929 XP002235909 & J BIOTECHNOL;JOURNAL OF BIOTECHNOLOGY 1999 ELSEVIER SCI B.V., AMSTERDAM, NETHERLANDS, Bd. 75, Nr. 2, 1999, Seiten 273-280,
- DATABASE BIOSIS [Online] BIOSCIENCES INFORMATION SERVICE, PHILADELPHIA, PA, US; 1980 KOWAL R ET AL: "STABILIZATION OF PROTEINS IMMOBILIZED ON SEPHAROSE FROM LEAKAGE BY GLUTARALDEHYDE CROSS LINKING" Database accession no. PREV198070007208 XP002232791 & ANALYTICAL BIOCHEMISTRY, Bd. 102, Nr. 1, 1980, Seiten 72-76, ISSN: 0003-2697
- DATABASE MEDLINE [Online] US NATIONAL LIBRARY OF MEDICINE (NLM), BETHESDA, MD, US; Juli 1991 (1991-07) GOLDBERG M ET AL: "Specific interchain cross-linking of antibodies using bismaleimides. Repression of ligand leakage in immunoaffinity chromatography." Database accession no. NLM1772910 XP002232792 & BIOCONJUGATE CHEMISTRY. UNITED STATES 1991 JUL-AUG, Bd. 2, Nr. 4, Juli 1991 (1991-07), Seiten 275-280, ISSN: 1043-1802

## Beschreibung

### Felder der Erfindung

Die Erfindung betrifft ein Verfahren zur Behandlung von Affinitätschromatographie-Matrices, das geeignet ist das Liganden-*leakage* zu verringern. Darüber hinaus betrifft die Erfindung low*leakage* Affinitätschromatographie-Matrices sowie Methoden zur Bestimmung der Liganden-*leakage.*

### Hintergrund

Affinitätschromatographie-Matrices, nachfolgend auch als Affinitätsmatrices bezeichnet, werden bei der industriellen Reinigung von verschiedenen Substanzen eingesetzt. Über immobilisierte Liganden lassen sich Substanzen spezifisch anreichern und reinigen, die eine gewisse Affinität zu dem jeweils verwendeten Liganden besitzen. Für die industrielle Aufreinigung von Antikörpern, insbesondere die Reinigung monoklonaler Antikörper, hat sich die Verwendung von immobilisiertem Protein A als initialen Reinigungsschritt bewährt. Hierbei binden Antikörper aus der mobilen Phase spezifisch an den Protein A-Liganden, der kovalent an einen Träger (z.B. Sepharose) gekoppelt ist. Protein A aus *Staphylococcus aureus* (wildtyp Protein A) sowie gentechnisch verändertes, rekombinantes Protein A (rec. Protein A) interagiert über nichtkovalente Wechselwirkungen mit der konstanten Region (Fc-Fragment) der Antikörper. Diese spezifische Interaktion kann ausgenutzt werden um Prozess-bedingte Kontaminanten, wie Wirtszellproteine und/oder Medienbestandteile, effizient von dem Antikörper abzutrennen. Durch eine Veränderung des pH-Werts kann die Interaktion zwischen Antikörper und Protein A-Liganden gezielt aufgelöst und die Antikörper von der stationären Phase freigesetzt bzw. eluiert werden. Bei der Elution lösen sich erfahrungsgemäß nicht nur die gewünschten Antikörper, sondern in Abhängigkeit von der Stabilität der eingesetzten Protein A-Matrix zu einem gewissen Anteil auch Protein A, also der Ligand selbst. Das Ablösen des kovalent an die Säulenmatrix gekoppelten Protein A wird als "Protein A-*leakage*" oder generell als "*Liganden-leakage*" bezeichnet, ein Effekt der bei der Verwendung von Affinitätschromatographie-Matrices generell zu beobachten ist. Das Ausmaß des *Liganden-leakages* hängt von verschiedenen Faktoren ab. Zum einen wird das Liganden-*leakage* von der Kopplungseffizienz mit der der Ligand an einen Träger gekoppelt ist, beeinflusst. Eine geringe Kopplungseffizienz fördert erfahrungsgemäß das Liganden-*leakage.* Zum anderen scheint Liganden-*leakage* auch durch die speziellen Prozessbedingungen beeinflusst zu werden unter denen das Chromatographieverfahren durchgeführt wird.

Die Aufgabe des Liganden-leakage in Affinitätschromatographie-Matrices wird sich widmet in XP-002232792 und EP-A-0345579. Die "*leakage*-Rate" des eingesetzten Liganden, also die Menge an Ligand die pro Einheit Matrix oder pro Einheit zu reinigende Substanz von der Säule gewaschen wird, ist ein wichtiges Qualitätskriterium der verwendeten Affinitätschromatographie-Matrices. In Folge eines zu hohen *Liganden-leakage* kommt es regelmäßig zu einer kritischen, qualitätsrelevanten Kontamination des zu reinigenden pharmazeutischen Wirkstoffs. Aufwendige *downstream* Reinigungsschritte sind erforderlich, um den Wirkstoff wieder von dem Liganden zu trennen. Andernfalls besteht die Gefahr, dass unzureichend gereinigte pharmazeutische Erzeugnisse im Patienten unerwünschte Nebenwirkungen auslösen, bedingt durch eine zu hohe Ligandenkonzentration. Zur Reduktion des Protein A-*leakages* in industriellen Prozessen wird (kann) vor der Erstbenutzung der Protein A-Matrix und nach einer längeren Lagerung der Protein A-Matrix eine Vorbehandlung der Säulenmatrix unter stringenten Pufferbedingungen durchgeführt (werden). Empfohlen wird eine Vorbehandlung der Matrix mit einer chaotropen Substanz, wie zum Beispiel mit 6 M Harnstoff oder 6 M Guanidinhydrochlorid (1 Bettvolumen).

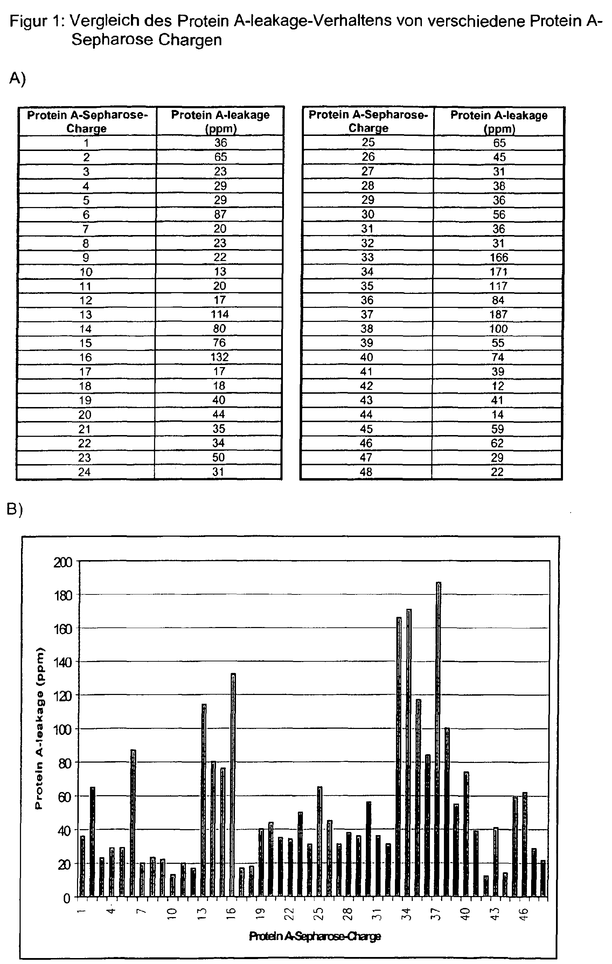

Neben dieser Vorbehandlung wird die Säulenmatrix vor und nach jedem Säulenlauf gereinigt. Die entsprechenden Verfahren dienen primär der Erhaltung der Prozess-Hygiene (CIP). Für die CIP / Gelreinigung von Protein A-Sepharose wird empfohlen, die Säulematrix mit zwei Säulenvolumen (*column volume* = cv) eines 0,1%igem nicht-ionischen Detergenz bei 37°C zu spülen. Die Kontaktzeit wird mit einer Minute angegeben. Zur Reduktion möglicher mikrobieller Kontaminationen wird zusätzlich geraten die Matrix für 6 Std. mit 2% Hibitan-(2)-Gluconat und 20% EtOH zu behandeln und anschließend sorgfältig mit einem Bindungspuffer (pH 7-8) zu spülen. Für die CIP von "*Streamline rProtein A*" der Firma Amersham Pharmacia Biotech (Uppsala, Schweden) wird eine Behandlung der Protein A-Matrix mit 5% Natrium-N-Lauroylsarcosinat, 20 mM EDTA and 0,1 M NaCl in Phosphat-Puffer angegeben (Manual "Streamline rProtein A", Amersham Pharmacia Biotech, Code 18-1115-67). Wie eigene Untersuchungen belegen (Tabelle 1, Figur 1) sind diese Verfahren jedoch nicht hinreichend wirksam, um das Protein *A-leakage* auf ein zuverlässiges und reproduzierbar niedriges Maß zu reduzieren.

Für den Herstellungsprozeß biopharmazeutischer Arzneimittel ist es von größter Bedeutung stabile Protein A-Matices mit einem reproduzierbar niedrigen Protein *A-leakage* einzusetzen. Solche Matrices, mit konstant niedrigem *Leakage* sind jedoch zur Zeit nicht ausreichend in zuverlässiger Qualität verfügbar. Beispielhaft dargestellt ist dies in Tabelle 1 (Figur 1) für verschiedene Chargen einer Protein A-Sepharose.

Aufgabe der vorliegenden Erfindung war es, ein geeignetes Verfahren zur Vorbehandlung und / oder Behandlung von Affinitätschromatographie-Matrices zu entwickeln und zu etablieren, das eine Reduktion des Liganden-*leakage* auf ein reproduzierbar niedriges Niveau gewährleistet und somit im Ergebnis eine konstante Qualität von Affinitätsmatrices garantieren kann. Von besonderem Interesse war ein entsprechendes Verfahren für die Vorbehandlung von Protein A-Matrices zu etablieren, die insbesondere zur Reinigung von Antikörpern verwendet werden.

### Beschreibung der Erfindung

Gegenstand der vorliegenden Erfindung ist ein Venfahren zur Vorbehandlung und / oder Behandlung von Affinitätschromatographie-Matrices im Umfang der Patentansprüche, das geeignet ist das Liganden-*leakage* zuverlässig und reproduzierbar zu reduzieren und somit eine konstante Qualität von Affinitätschromatographie-Matrices zu garantieren, ohne dass dabei die Aktivität der Affinitätschromatographie-Matrix und/oder deren chromatographische Eigenschaft negativ beeinflusst werden. Nachfolgend meint der Begriff "Behandlung" auch eine Vorbehandlung der Affinitätschromatographie-Matrix vor ihrer Verwendung zu chromatographischen Zwecken.

Überraschenderweise konnte ein Verfahren gefunden werden, das als wesentlichen Verfahrensschritt eine Behandlung der Affinitätschromatographie-Matrix mit einer oberflächenaktiven Substanz enthält. Oberflächenaktive Substanzen im Sinne der Erfindung sind sowohl nicht-ionische als auch ionische Detergenzien, einschließlich zwitterionischen Detergenzien. Eine entsprechende erfindungsgemäße Behandlung einer Affinitätschromatographie-Matrix wird nachfolgend auch als "Detergenzbehandlung" bezeichnet.

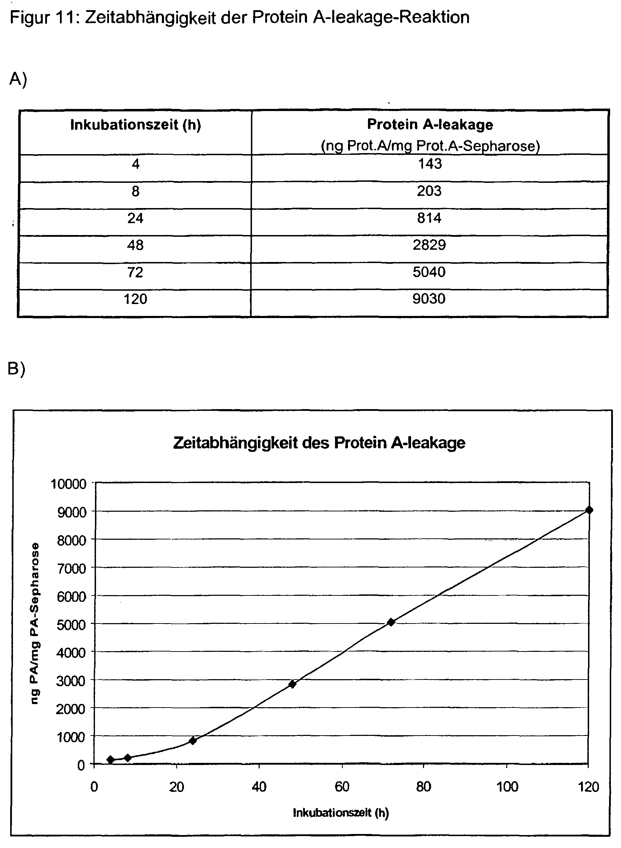

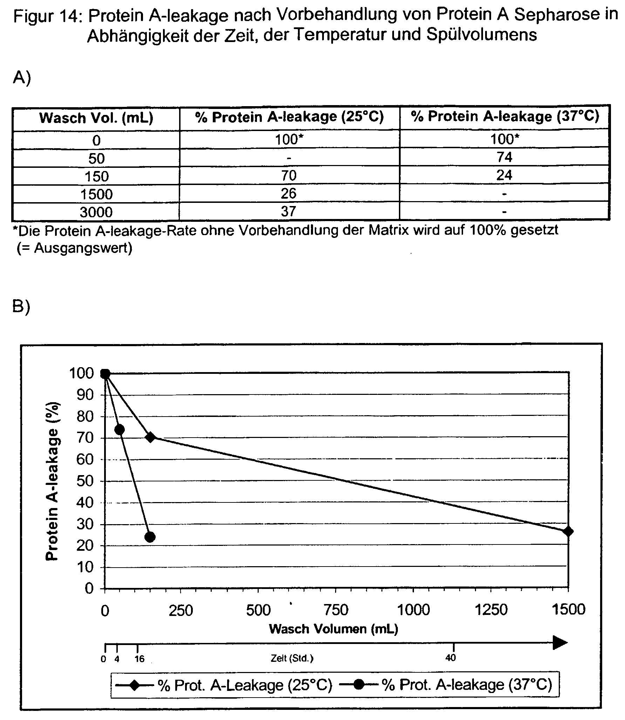

Die Effektivität des erfindungsgemäßen Verfahrens wird maßgeblich von der Behandlungsdauer (Kontaktzeit), dem Volumen, der Temperatur und der verwendeten oberflächenaktiven Substanz bestimmt. Überraschenderweise zeigte sich, dass zwischen Behandlungsdauer und Reduktion des Liganden-*leakage* zu Beginn der Behandlungsdauer keine lineare Beziehung besteht. Es stellte sich heraus, dass eine Kontaktzeit (Behandlungsdauer) von weniger als 16 bis 20 Std. keinen oder nur einen geringen Effekt auf die Reduktion des Liganden-*leakage* bei Raumtemperatur (RT) hatte (Figuren 11 und 14). Mit Raumtemperatur sind Temperaturen zwischen 15 und 25°C gemeint. Erst ab einer Behandlungszeit von ca. 16 Std. trat eine deutliche Reduktion des Liganden-*leakage* ein. Dabei ist die in Figur 11 dargestellte Menge an Protein A umgekehrt proportional zum Liganden-*leakage* das eine Protein A-Matrix nach entsprechender Vorbehandlung noch zeigt.

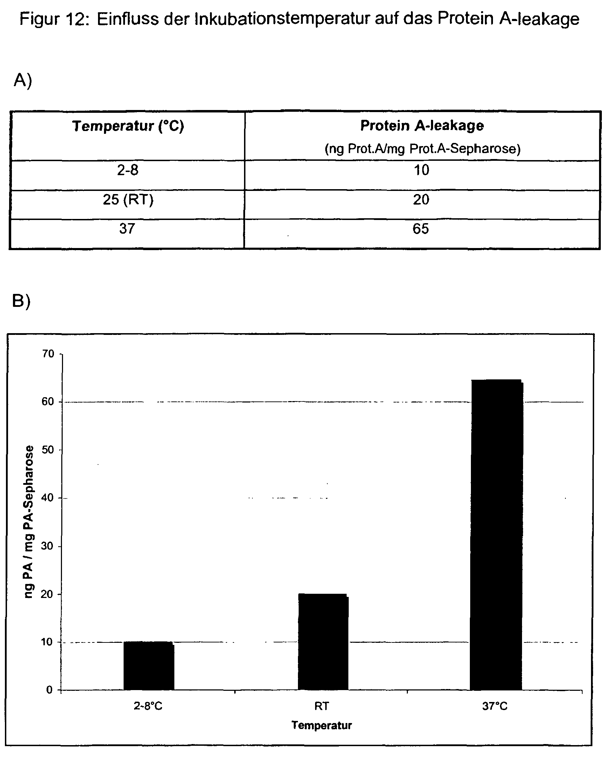

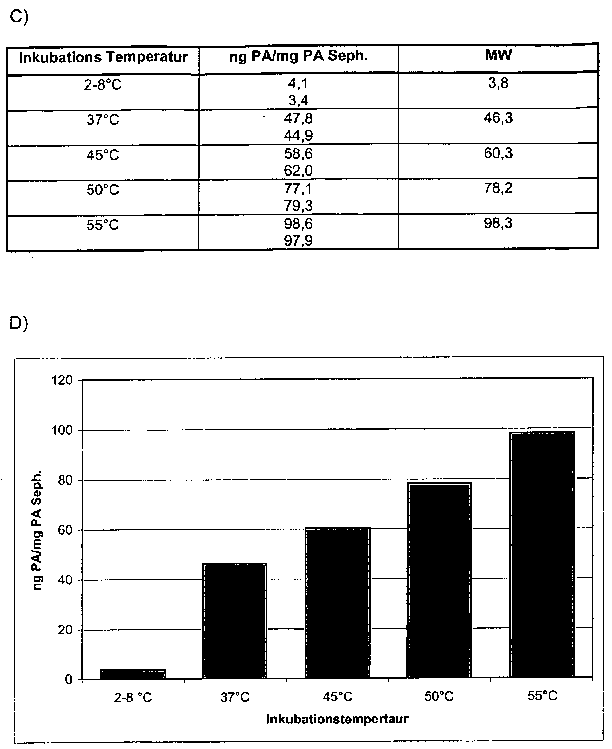

Mit zunehmender Behandlungsdauer kann das *Liganden-leakage* weiter reduziert werden. Die benötigte Behandlungsdauer reduziert sich hierbei mit steigender Temperatur (Verfahrenstemperatur). Bei einer Temperatur oberhalb von 25°C, insbesondere bei 30 - 40°C und im Besonderen bei 36 - 38°C reduziert sich die erforderliche Behandlungsdauer des erfindungsgemäßen Verfahrens, die erforderlich ist um das Liganden*-leakage* reproduzierbar niedriges Maß zu reduzieren ohne dabei die Aktivität der Affinitätschromatographie-Matrix oder die chromatographischen Eigenschaften zu beeinträchtigenden, auf 4 - 16 Std. (Figur 14).Die Figur 12 verdeutlicht, dass eine weitere Temperaturerhöhung, beispielsweise bis 55°C einen weiteren positiven Effekt auf das Liganden-*leakage* hat, also zu einer erfindungsgemäßen Verringerung des Liganden*-leakage* führt.

Erfindungsgemäß ist demnach ein Verfahren zur Reduktion der Liganden-*leakage*, bestehend aus einer Behandlung einer Affinitätschromatographie-Matrix mit mindestens einem Detergenz für mindestens 16 Std., bevorzugt für 16 - 48 Std., bei 15 - 25°C (RT). Die optimale Kontaktzeit in Abhängigkeit der Inkubationstemperatur kann sehr leicht und ohne erheblichen Aufwand mit Hilfe einer der in dieser Anmeldung beschriebenen Methoden zur Bestimmung der Liganden-*leakage* (*Inkubationstest, Small Scale-Verfahren*) ermittelt werden.

Eine weitere Ausführungsform der Erfindung besteht in der Behandlung der Affinitätschromatographie-Matrix für mindestens 16 Std. bei RT mit mindestens 5 - 30 Bettvolumen, vorzugsweise mit nicht weniger als 10 Bettvolumen, zumindest einem Detergenz.

Ein reproduzierbar niedriges Niveau im Sinne der Erfindung meint beispielsweise, dass das Liganden-*leakage* einer Affinitätschromatographie-Matrix, bestimmt nach einer der nachfolgend beschriebenen Methoden zur Bestimmung der Liganden*-leakage* (*Inkubationstest, Small Scale-Verfahren*), einen Wert kleiner 80 ng Ligand / mg Affinitätsmatrix aufweist. In einer bevorzugten Ausführungsform der Erfindung beträgt die Liganden-*leakage* bestimmt nach einer dieser Methoden einen Wert kleiner 40 ng Ligand / mg Affinitätsmatrix, in einer besonders bevorzugten Ausführung einen Wert von kleiner 20 ng Ligand / mg Affinitätsmatrix, und in einer weiteren besonders bevorzugten Ausführungsform der Erfindung einen Wert von kleiner 10 ng Ligand / mg Affinitätsmatrix.

Die hier beschriebenen erfindungsgemäßen Verfahren sind besonders geeignet, die Liganden-*leakage* von Protein A-Matrices zu verringern. Folglich gelten die hier beschriebenen Verfahren als erfindungsgemäß, wenn sie zur Behandlung von Protein A-Matrices eingesetzt werden. Protein A-Matrices im Sinne der Erfindung sind Affinitätschromatographie-Matrices die immobilisiertes Protein A als Liganden enthalten. Dies umfasst Affinitätsmatrices die wildtyp Protein A, beispielsweise aus *Staphylococcus aureus* als Liganden enthalten. Eine Beschreibung von Protein A befindet sich u.a. bei Lofdahl, S. et al., 1983 und Lindmark et. al., 1983. Darüber hinaus bezieht sich die Erfindung auch auf Matrices mit rekombinant hergestelltem Protein A als Liganden. Rekombinantes Protein A ist beispielhaft von Duggleby C.J. und Jones, S.A., 1983 oder Li, R. et al., 1998 beschrieben und dem Fachmann bekannt.

Das Protein A kann hierbei an verschiedene Trägermaterialien wie zum Beispiel an Agarosen, Polysaccharide, Dextrane, Silica-Gele, Glas-beads gekoppelt sein. Eine nicht abschließende Aufstellung geeigneter Trägermaterialien findet sich in Harlow, E. und Lane, D. 1999. Ein häufig verwendetes Trägermaterial bilden auf Agarose basierende Materialien, wie z.B. die dem Fachmann bekannten "Sepharosen" der Firma Amersham Pharamcia Biotech, Uppsala, Schweden. Spezielle Beispiele für Protein A-Sepharosen finden sich im Manual dieser Firma zu dem Thema "Affinity Chromatography" aus dem Jahr 2001. Darüber hinaus sind dem Fachmann weitere Protein A-Chromatographie-Matrices bekannt, wie z.B. MabSelect (Firma Amersham Pharamcia Biotech, Uppsala, Schweden), STREAMLINE™ rProtein A, (Firma Amersham Pharamcia Biotech, Uppsala, Schweden), Poros A (Millipore, Durham, England). Das erfindungsgemäße Verfahren schließt eine Behandlung der entsprechenden Matrices mit ein, wobei die Aufzählung der Matrices beispielhaft und nicht abschließend zu verstehen ist.

Die Kopplung des Liganden erfolgt in der Regel über freie Amino-, Carboxyl- oder Schwefel-Gruppen mittels Cyanogen-Bromid-Aktivierung, NHS-Aktivierung oder Thiol-Kopplung an die Trägermatrix. Siehe hierzu beispielhaft Manual "Affinity Chromatography", Amersham Pharamcia Biotech, Uppsala, Schweden, 2001.

Neben einer Angabe der Liganden-*leakage* in ng Ligand / mg Affinitätsmatrix ist speziell für das Liganden*-leakage* von Protein A-Sepharose die Angabe in ng Protein A / mg Antikörper (= ppm) eine gebräuchliche Grösse, da hier die Konzentration des Liganden (Prozesskontaminante) in Bezug zur Konzentration des Antikörpers gesetzt wird. Die oben beschriebenen Zahlenwerte für ein reproduzierbar niedriges Niveau an Liganden-*leakage* in ng Ligand / mg Affinitätsmatrix entsprechen sich hierbei weitestgehend.

Demnach entspricht ein reproduzierbar niedriges Niveau an Protein A*-leakage* beispielhaft einem *Leakage*, bestimmt nach einer der nachfolgend beschriebenen Methoden zur Bestimmung der Liganden-*leakage* (Inkubationstest, *Small Scale-Verfahren*), einem Wert von kleiner 80 ppm Protein A. In einer bevorzugten Ausführungsform der Erfindung beträgt die Protein A-*leakage* bestimmt nach einer dieser Methoden einem Wert von kleiner 40 ppm Protein A, in einer besonders bevorzugten Ausführung einem Wert von kleiner 20 ppm Protein A, und in einer weiteren besonders bevorzugten Ausführungsform der Erfindung einem Wert von kleiner 10 ppm Protein A.

Die Wirksamkeit des erfindungsgemäßen Verfahrens, mit der das Liganden-*leakage,* insbesondere das Protein A*-leakage*, verringert werden kann, kann dadurch gesteigert werden, dass die Matrix zusätzlichen Behandlungsschritten ausgesetzt ist. Als wirksam zeigte sich ein Verfahren, bei dem die Affinitätsmatrix zusätzlich zur der Detergenzbehandlung (mit mindestens einer oberflächenaktiven Substanz) mit einer chaotropen Substanz vor- und / oder nachbehandelt wird.

In einer bevorzugten Ausführungsform dieses Verfahrens folgt dem Behandlungsschritt mit einer chaotropen Substanz ein Waschschritt mit einem für die Affinitätsmatrix stringenten Elutionspuffer. Mit einem "*für die Affinitätsmatrix stringenten Elutionspuffer"* im Sinne der Erfindung sind solche Elutionspuffer gemeint, die eine spezifische Elution einer zu reinigenden Substanz von ihrem Liganden ermöglichen. Handelt es sich beispielsweise bei der zu reinigenden Substanz um einen Antikörper und bei dem Liganden um Protein A, so erfüllt ein saurer Elutionspuffer (pH 2,0 - 4,0) die Anforderungen eines stringenten Elutionspuffer im Sinne der Erfindung (Affinity Chromatography - Principles and Methods, Seite 63, Amersham Pharmacia Biotech, Uppsala, Schweden).

In einer besonders bevorzugten Ausführungsform folgt dem Waschschritt mit einem für die Affinitätsmatrix stringenten Puffer ein weiterer Waschschritt mit einem neutralen Puffer, dessen pH beispielsweise zwischen pH 6,5 - 8,5 liegt.

Demnach gelten solche Verfahren als erfindungsgemäß, die neben einer der oben beschriebenen erfindungsgemäßen "Detergenzbehandlung" einen der folgenden Schritte beinhalten:
(A) Behandlung der Matrix mit einer chaotropen Substanz; oder
(B) Behandlung der Matrix mit einer chaotropen Substanz gefolgt von einem Waschschritt mit einem für die Affinitätsmatrix stringentem Elutionspuffer; oder
(C) Behandlung der Matrix mit einer chaotropen Substanz, gefolgt von einem Waschschritt mit für die Affinitätschromatographie stringenten Elutionspuffer und einem neutralen Waschpuffer, bevorzugt pH 6,5 - 8,5,
insbesondere dann, wenn einer dieser Schritt der Detergenzbehandlung vorangestellt wird und/oder sich an diese anschließt. In einem besonders bevorzugten Verfahren handelt es sich bei der chaotropen Substanz um Harnstoff oder Guanidinhydrochlorid, bevorzugt in einer Konzentration von 4 - 6 M.

Ein entsprechendes Verfahren ist besonders für die Verringerung der Liganden*-leakage* von Protein A-Matrices geeignet und gilt folglich als besonders erfindungsgemäß, wenn ein saurer Elutionspuffer, bevorzugt mit einem pH-Wert von 2,0 - 4,0 verwendet wird.

Eine weitere bevorzugte Ausführungsform der Erfindung besteht in einem Verfahren, welches die folgenden Verfahrensschritte beinhaltet oder aus diesen besteht:
(A) Vorbehandlung der Affinitätschromatographie-Matrix mit einer chaotropen Substanz, gefolgt von einem sauren Puffer, bevorzugt pH 2,0 - 4,0, und einem neutralen Puffer, bevorzugt pH 6,5 - 8,5;
(B) Behandlung der Affinitätschromatographie-Matrix mit zumindest eines Detergenzes aktiven Substanz nach einem der oben beschriebenen Verfahren, das geeignet ist das Liganden*-leakage* zu reduzieren;
(C) Nachbehandlung der Affinitätschromatographie-Matrix mit einer chaotropen Substanz, gefolgt von einem sauren Puffer (pH 2,0 - 4,0) und einem neutralen Waschpuffer (pH 6,5 -8,5).

Bei einer weiteren Ausführungsform dieser Erfindung, kann der saure Elutionspuffer durch einen beliebigen, für eine Affinitätsmatrix stringenten Elutionspuffer ersetzt werden. Bevorzugt lässt sich das oben beschriebene erfindungsgemäße Verfahren wiederum zur Verringerung der Liganden*-leakage* von Protein A-Matrices verwenden.

Detergenzien im Sinne der Erfindung sind sowohl nicht-ionische als auch ionische Detergenzien, insbesondere zwitterionische Detergenzien. Bei den nicht-ionischen Detergenzien handelt es sich bevorzugt um Vertreter der PEG-Alkylether, PEG-Sorbitanfettsäureester, Alkylphenyl-PEG-Ether oder PEO-PPO-Block-Co-Polymere. In einer besonders bevorzugten Ausführungsform der Erfindung werden PEG-Alkylether wie Polyoxyethylen(23)laurylether (Brij 35, C₁₂H₂₅(OCH₂CH₂)ₙOH, n~23, CAS: 9002-92-0) und Polyoxyl-20-cetostearylether, oder PEG-Sorbitanfettsäureester (Polysorbat-Derivate) wie Polyoxyethylen(20)sorbitan-monolaurat (Polysorbat 20, CAS: 9005-64-5) oder Polyoxyethylen (20)sorbitan-monooleat (Polysorbat 80, CAS: 9005-65-6), oder Alkylphenyl-PEG-Ether (Octoxynol-Derivate), wie t-Octylphenoxypolyethoxyethanol (Triton-X-100, CAS: 9002-93-1), oder ein Nonylphenol-polyoxyethylenether wie Polyglycolether (*nonionic surfactants*) Typ NP-40 (Tergitol NP40, CAS: 127087-87-0) oder verzweigter Polyoxyethylen-nonylcyclohexylether (Triton N-101, C₉H₁₉C₆H₁₀(OCH₂CH₂)ₙOH, CAS: 123359-41-1), oder PEO-PPO-Block-Co-Polymere (Poloxamer-Derivate), wie Polyoxyethylen-polyoxypropylen-block-copolymer (Pluronic F 68, Lutrol F 68, Poloxamer 188, CAS: 9003-11-6 oder Poloxamer 407, Pluronic F 127, Lutrol F127, CAS: 9003-11-6) verwendet. Darüber hinaus eignet sich auch die Verwendung von Polyethylenglycol (PEG) zur Behandlung der Affinitätsmatrices, so dass auch deren Verwendung als erfindungsgemäß gilt.

Unter Polyglycolether (*nonionic surfactants*) Typ NP-40 (Tergitol NP40, CAS: 127087-87-0) ist eine Verbindungen mit folgender Strukturformel zu verstehen:

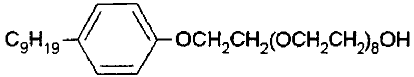

Unter Polyoxyethylen-polyoxypropylen-block-copolymer (Pluronic F 68, Lutrol F 68, Poloxamer 188, CAS: 9003-11-6) sind Verbindungen mit folgender Strukturformel zu verstehen:

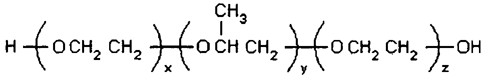

Unter Polyoxyethylen-polyoxypropylen-block-copolymer (Pluronic F127, Lutrol F127, Poloxamer 407, CAS: 9003-11-6) sind Verbindungen mit folgender Strukturformel zu verstehen:

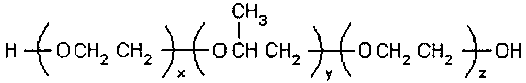

Von den zwitterionischen Detergenzien eignen sich insbesondere 3-(3-Cholamidopropyl)-dimethylammonio-1-propansulfonat (CHAPS, CAS: 75621-03-3) oder 3-(3-Cholamidopropyl)-dimethyl-ammonio-2-hydroxy-1-propansulfonat (CHAPSO, CAS: 82473-24-3) für die erfindungsgemäße Behandlung der Matrices.

Die nicht-ionischen Detergenzien werden bevorzugt in einer Konzentration von 0,001 bis 5% (v/v) eingesetzt. Besonders bevorzugt ist die Verwendung von Polysorbat (20 und 80) in einer Konzentration > 0,005 % (v/v), Pluronic (F68) in einer Konzentration von > 0,001 % (v/v) und Triton-X-100 in ein Konzentration von > 0,001 % (v/v) ist. In einer weiteren Ausführung der Erfindung wird Polysorbat, bevorzugt Polysorbat 20, in einer Konzentration von 0,005 - 0,5 % (v/v), Pluronic, bevorzugt Pluronic F68, und Triton-X-100 in ein Konzentration von > 0,001 - 0,1% (v/v) eingesetzt. Polyethylenglycol eignet sich ebenfalls in einer Konzentration von > 0,01 (v/v), wird aber bevorzugt in einer Konzentration von 0,01- 1% verwendet.

Zwitterionische Detergenzien werden bevorzugt in einer Konzentration von 0,01 bis 1% (v/v) eingesetzt, besonders bevorzugt ist die Verwendung der Detergenzien CHAPS und/oder CHAPSO in einer Konzentration > 0,01% (v/v). In einer weiteren Ausführungsform beträgt die Konzentration von CHAPS und/oder CHAPSO 0,01-1% (v/v).

Erfindungsgemäß ist auch die Behandlung der Affinitätschromatographie-Matrices, bevorzugt die Behandlung Protein A-Matrices mit einer Kombination aus den besagten Detergenzien.

Neben den Verfahren zur Reduktion der Liganden-*leakage* sind auch "*low leakage*" Affinitätschromatographie-Matrices Gegenstand der vorliegenden Erfindung, die nach einem der oben beschriebenen, erfindungsgemäßen Verfahren zur Verringerung der Liganden*-leakage* behandelt wurden. In einer bevorzugten Ausführung sind *low leakage* Protein A-Matrices Gegenstand der vorliegenden Erfindung, sofern sie nach einem entsprechenden Verfahren zur Verringerung der Protein A*-leakage* behandelt wurden. *Low leakage* Protein A-Matrices meint sowohl Matrices, die wildtyp, wie zum Beispiel Protein A von *Staphylococcus aureus,* oder rekominant hergestelltes Protein A enthalten. Beispielhaft zu nennen sind: Protein A-Sepharosen und Protein A-Sepharose-beads (z.B. STREAMLINE™ rProteinA der Firma Amersham Pharmacia Biotech, Uppsala, Schweden), wobei die Aufzählung nur beispielhaft und nicht abschließend zu verstehen ist.

Zusätzlich zu den besagten Verfahren zur Verringerung der Liganden*-leakage* von Affinitätsmatrices sowie zu entsprechend behandelten *low leakage* Affinitätschromatographie-Matrices beinhaltet die vorliegende Erfindung Methoden zur Bestimmung der Liganden-*leakage*. Eine entsprechende Methode wird nachfolgend auch als *"Inkubationstest"*, eine weitere als *"Small-Scale-Verfahren"* bezeichnet.

Der erfindungsgemäße Inkubationstest beinhaltet die nachfolgend beschriebenen Verfahrensschritte (A) - (C), in einer besonders bevorzugten Ausführungsform besteht der Inkubationstest aus diesen Verfahrensschritten:
(A) Vorbehandlung der Affinitätschromatographie-Matrix nach einem der oben beschriebenen erfindungsgemäßen Verfahren, das geeignet ist die Liganden*-leakage* zu reduzieren;
(B) Inkubation der vorbehandelten Affinitätschromatographie-Matrix mit einer zusätzlichen Lösung die auch als Probe bezeichnet wird; und
(C) Quantifizierung des Liganden in der zusätzlichen Lösung (Probe) über einen geeigneten quantitativen Test, wobei es bei dem quantitativen Test beispielsweise um einen Liganden-spezifischen ELISA handelt.

In einer besonderen Ausführungsform der hier dargestellten erfinderischen Methode zur Bestimmung der Liganden*-leakage* wird die Affinitätschromatographie-Matrix unter Schritt A wie folgt vorbehandelt:

In einem ersten Schritt (Schritt (A1)) erfolgt eine Behandlung der Affinitätsmatrix mit einer chaotropen Substanz, bevorzugt mit Harnstoff oder Guanidinhydrochlorid, besonders bevorzugt in einer Konzentration von 4 - 6 M, gefolgt von einem Waschschritt mit einem für die Affinitätsmatrix stringenten Elutionspuffer, gefolgt von einem Waschschritt mit einem neutralen Puffer, bevorzugt mit einem pH-Wert von 6,5 - 8,5.

In Schritt (A2) erfolgt eine Behandlung der Affinitätsmatrix mit mehreren Bettvolumina, bevorzugt 5 - 30, zumindest einer oberflächenaktiven Substanz, wobei die Kontaktzeit mindestens 4 Std. und die Inkubationstemperatur zwischen 25 - 37°C beträgt. Die Temperatur kann jedoch auch über 37°C erhöht werden, beispielsweise auf Werte bis etwa 55°C.

In Schritt (A3) wird die Affinitätschromatographie-Matrix wiederum mit einer chaotropen Substanz, bevorzugt mit Harnstoff oder Guanidinhydrochlorid, besonders bevorzugt in einer Konzentration von 4 - 6 M behandelt, gefolgt von einem Waschschritt mit einem für die Affinitätsmatrix stringenten Elutionspuffer, gefolgt von einem Waschschritt einem neutralen Puffer, bevorzugt mit einem pH-Wert von 6,5 - 8,5.

Bei der unter Schritt (B) erwähnten zusätzlichen Lösung, handelt es sich bevorzugt um eine Probe die dem Zwischenprodukt entspricht, welches unter Produktionsbedingungen als Ausgangsmaterial für die Affinitätschromatographie eingesetzt wird. Stellt die Affinitätschromatographie beispielsweise den initialen Reinigungsschritt dar, so kann es sich beispielhaft um die Ernteprobe eines Fermentationsprozesses handeln. Darüber hinaus ist aber auch die Verwendung von Zellkulturmedium oder eines beliebigen Puffers vorstellbar und erfindungsgemäß. In einer weiteren bevorzugten Ausführungsform der Erfindung handelt es sich bei der zusätzlichen Probe um das Eluat, welches unter Prozessbedingungen gewonnen wird. In einer besonderen Ausführungsform beträgt die Kontaktzeit für die Probenbehandlung (Schritt B) nicht weniger als 8 Std., wobei die Inkubationstemperatur nicht unter 18°C liegt und bevorzugt etwa 37°C beträgt.

Die quantitative Bestimmung des Liganden kann über eine beliebige, dem Stand der Technik bekannte Meßmethode erfolgen, die geeignet ist, den Liganden zu quantifizieren. Im Falle eines Protein-haltigen Liganden ist beispielsweise eine Proteinbestimmung nach der Biuret- oder Lowry-Methode (Harris and Angal, 1995) möglich. Eine weitere Methode zur Quantifizierung von Protein- oder Peptid-Liganden liegt in der Ausnutzung von Antikörper-Antigen-Wechselwirkungen. Die Verwendung entsprechender Testsysteme, bei denen der Ligand über einen spezifischen, gegen diesen Liganden gerichteten Antikörper nachgewiesen wird, ist beispielhaft in *"*Immunoassay", Diamandis, P. und Christopoulos T.K. (1996), beschrieben und für den Fachmann ohne erfinderisches Zutun durchführbar. Die hier aufgeführten Methoden sind beispielhaft und nicht als abschließende Aufzählung zu verstehen.

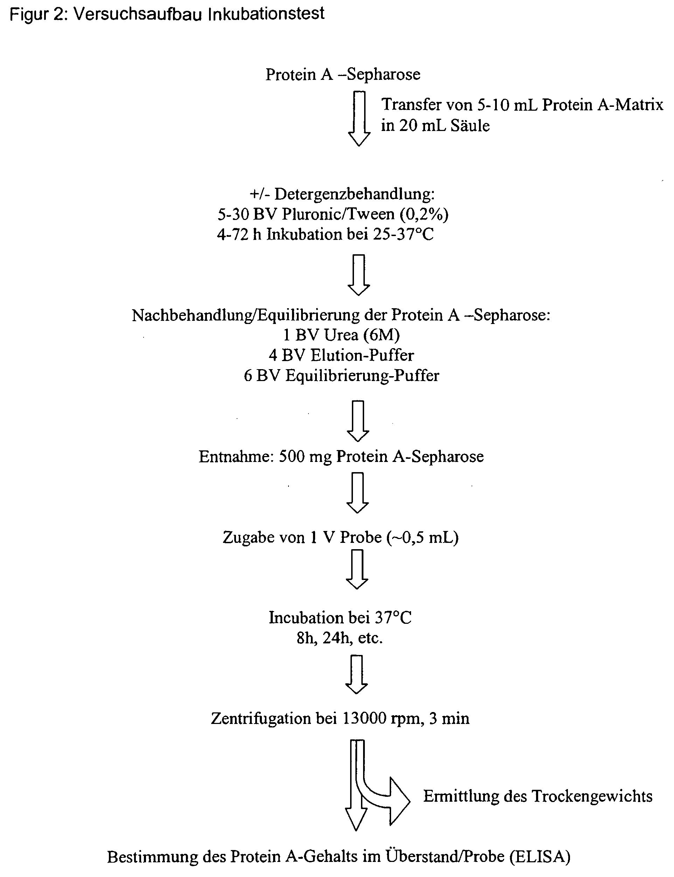

Besonders erfindungsgemäß sind die oben beschriebenen Ausführungsformen der Methode zur Bestimmung der Liganden*-leakage* von Protein A-Matrices. Bei einer entsprechenden Methode wird bevorzugt ein saurer Puffer, besonders bevorzugt ein Puffer mit einem pH-Wert von 2,0 - 4,0 als Elutionspuffer verwendet. Eine weitere Ausführungsform der Methode zur Bestimmung der Protein *A-leakage* ist in den Beispielen (s.u.) beschrieben. Darüber hinaus ist auch die Methode zur Bestimmung der Protein A*-leakage* der Figur 2 erfindungsgemäß.

Ein bevorzugtes Verfahren zum Nachweis von Protein A stellt beispielsweise die Verwendung eines sog. *"Sandwich Protein A ELISA"* dar, der auch geringe Mengen (ppm) an Protein A detektieren kann. Das Prinzip eines solchen Tests ist beispielhaft in *"*ELISA", Kemeny, D.M. (1994), beschrieben, und kann durch den Fachmann ohne weiteres angewendet werden. Für den Protein A-ELISA wird ein hochaffiner anti-Protein A Antikörper an ein Reaktionsgefäß, vornehmlich an eine 96-Loch Mikrotiterplatte fixiert. Der Protein A Nachweis in der zu analysierenden Probe erfolgt nach Inkubation der Probe mit dem fixierten anti-Protein A-Antikörper über einen zweiten, ebenfalls hochaffinen anti-Protein A-Antikörper, der zusätzlich mit einem Enzym, beispielsweise einer Peroxidase oder alkalische Phosphatase markiert ist. Entsprechende unmarkierte und/oder mit einem Enzym markierte anti-Protein A-Antikörper sind dem Fachmann bekannt und z.B. über die Firmen American Research Products, Inc. (Belmont, USA), Biogenesis Ltd. (Poole, England) oder O.E.M. Concepts, Inc. (New Jersey, USA) zu beziehen. Ein entsprechender Inkubationstest dient auch als Referenzmethode für die Bestimmung der erfindungsgemäßen Grenzwerte für ein reproduzierbar niedriges Niveau an Liganden*-leakage,* insbesondere für ein zulässiges Protein A*-leakage.*

Erfindungsgemäß sind auch solche Inkubationstests, die auf dem selbem Verfahrensprinzip beruhen und sich lediglich durch Änderungen der Pufferzusammensetzung und/oder der Inkubationsbedingungen unterscheiden. Tests, die auf dem selben Verfahrensprinzip beruhen sind auch solche, bei denen eine Affinitätsmatrix mit unterschiedlichen Lösungen inkubiert wird und die Menge an Ligand zumindest in einer Lösung als Maß für die Liganden*-leakage* bestimmt wird.

Erfindungsgemäß ist darüber hinaus eine weitere Methode zu Bestimmung des Liganden-*leakage.* Hierbei handelt es sich um ein Verfahren, dass zur Bestimmung der Liganden*-leakage* unter Prozessbedingungen angewendet werden kann und im weiteren auch als *"Small-Scale* Verfahren" bezeichnet wird. Die erfindungsgemäße Methode beinhaltet oder besteht aus den nachfolgend beschriebenen Verfahrensschritten:
(A) Vorbehandlung der Affinitätschromatographie-Matrix nach einem der oben beschriebenen erfindungsgemäßen Verfahren, welches geeignet ist das Liganden*-leakage* zu reduzieren;
(B) Beladen der Affinitätschromatographie-Matrix mit einer zu reinigenden Substanz;
(C) Waschen der Affinitätschromatographie-Matrix mit einem spezifischen Waschpuffer;
(D) Inkubation der Affinitätschromatographie-Matrix mit einem stringenten Elutionspuffer;
(E) Quantifizierung des Liganden im Elutionspuffer über einen geeigneten quantitativen Test, wobei es sich bei dem quantitativen Test beispielsweise um einen Liganden-spezifischen ELISA handelt.

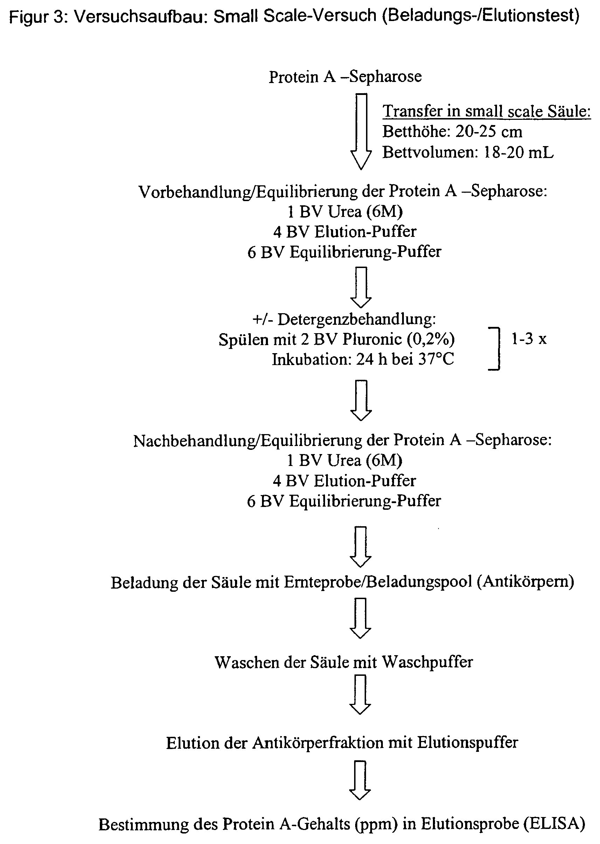

Erfindungsgemäß ist die Methode sowohl bei Anwendung im "*batch*-Verfahren" als auch für "säulenchromatographische Verfahren". Eine bevorzugte Ausführungsform dieser Methode dient zur Bestimmung der Liganden*-leakage* von Protein A-Matrices. Eine entsprechende erfindungsgemäße Methode ist in den Beispielen beschrieben. Eine besondere Ausführungsform stellt die Methode zur Bestimmung der Protein *A-leakage* dar, die im wesentlichen dem Verfahren entspricht, welches in Figur 3 der Zeichnungen dargestellt ist.

Erfindungsgemäß ist darüber hinaus auf ein Verfahren bei dem eines der erfindungsgemäßen Verfahren zur Verringerung der Liganden*-leakage* von Affinitätschromatographie-Matrices bei der Reinigung biopharmazeutischer Produkte eingesetzt wird. Dem zur Folge ist auch ein Verfahren, bei dem *low-leakage* Affinitätschromatographie-Matrices zur Reinigung biopharmazeutische Produkte eingesetzt werden, Gegenstand der Erfindung. *Low-leakage* Affinitätsmatrices im Sinne der Erfindung sind solche Matrices, die nach einem der hier beschriebenen, erfinderischen Verfahren behandelt bzw. vorbehandelt werden. Biopharmazeutische Produkte im Sinne der Erfindung sind Proteine, Peptide, Nukleinsäuren sowie deren Derivate. Erfindungsgemäß ist folglich auch die Verwendung eines Verfahren zur Verringerung der Liganden*-leakage* von Affinitätschromatographie-Matrices sowie die Verwendung von *low-leakage* Affinitätschromatographie-Matrices bei der Reinigung biopharmazeutischer Produkte.

Eine besondere Ausführungsform besteht in einem Verfahren, bei dem eines der hier beschriebenen Verfahren zur Verringerung der Protein A*-leakage* bei der Reinigung von Antikörpern oder chimären Antikörper-Molekülen, einschließlich deren Fragmente oder Derivate verwendet wird, sowie die Verwendung als solches. Erfindungsgemäß ist folglich auch ein Verfahren bei dem *low leakage* Protein A-Matrices zur Reinigung besagter Antikörpern, chimärer Antikörper-Molekülen, einschließlich deren Fragmente oder Derivate verwendet werden, also ein Verfahren bei dem Protein A-Matrices, die nach einem der hier beschrieben erfinderischen Verfahren zur Verringerung der Protein A*-leakage* behandelt bzw. vorbehandelt werden, verwendet werden. Erfindungsgemäß ist auch die Verwendung der *low leakage* Protein A-Matrices zur Reinigung besagter Antikörper, chimärer Antikörper-Molekülen, einschließlich deren Fragmente oder Derivate.

### Beschreibung der Abbildungen

Figur 1 beschreibt das unterschiedliche Liganden*-leakage* von Protein A-Sepharosen, die nicht nach einem der erfindungsgemäßen Verfahren vorbehandelt wurden.
Die Figuren 2 und 3 beschreiben zwei erfindungsgemäße Verfahren zur Bestimmung der Protein A*-leakage* einer Protein A-Matrix. Bei Figur 2 handelt es sich um die Beschreibung des erfindungsgemäßen Inkubationstests, bei Figur 3 um die Beschreibung des erfindungsgemäßen *Small-Scale* Verfahrens.
Figur 4 verdeutlicht den Effekt der Vorbehandlung einer Protein A-Matrix mit hoher und niedriger Protein A*-leakage* auf die Reduktion der Protein A*-leakage.*
Figur 5 zeigt den Einfluß, den eine Behandlung einer Protein A Matrix mit dem erfindungsgemäßen Verfahren auf die Reduktion der Protein A*-leakage* hat, bei mehrfacher Beladung der Matrix mit einer biologischen Probe im Small-scale Verfahren.
Die Figuren 6 - 10 zeigen den Effekt der Konzentration von Tween 20, Pluronic F68, Trition-X-100, CHAPS und Polyethylenglycol auf die Reduktion der Protein A*-leakage.*
Figur 11 beschreibt den Einfluß der Behandlungszeit auf die Reduktion der Protein A*-leakage.*
Figur 12 beschreibt den Einfluß der Behandlungstemperatur auf die Reduktion der Protein A-*leakage.* In (A, B) und (C, D) sind jeweils zwei unabhängig durchgeführte Versuche abgebildet.
Figur 13 beschreibt die detergenzabhängige Induktion/Reduktion der Protein *A-leakage* für verschiedene Protein A Matrices.
Figur 14 beschreibt die Reduktion der Protein *A-leakage* in Abhängigkeit der Zeit, der Temperatur und des Spülvolumens, wobei das Spülvolumen unmittelbar von der Behandlungsdauer abhängt.

### Ausführungsbeispiele

***Versuchsbeschreibung:*** Das Liganden*-leakage* wurde beispielhaft für Protein A-Matrices in einem Inkubationstest oder *"Small-scale* Verfahren" analysiert. Hierzu wird die Chromatographiematrix, vorliegend Protein A-Sepharose, entsprechend der Versuchsbeschreibung / des Versuchsaufbaus der beigefügten Skizzen (Figur 2 und 3) behandelt und anschließend mit einer Lösung (Probe) von Interesse inkubiert bzw. beladen. Als Probe diente beispielhaft Zellkulturmedium oder eine Ernteprobe aus dem Fermentationsprozess:

In Schritt 1 wird die Protein-A Sepharose seriell mit einem Bettvolumen (BV) Harnstoffpuffer (6M), vier BV eines sauren Elutionspuffer (0,1M NaCl, pH 4,0), sechs BV eines physiologischen Equilibrierungspuffer (30 mM Tris-HCl, 0,15M NaCl, pH 7 - 8) vorbehandelt.

In Schritt 2 wird die Protein A-Matrix über einen Zeitraum zwischen 4 - 48 Stunden mit einem Detergenz, vornehmlich 0,2% Pluronic bzw. 0,2% Tween 20, bei 25 - 37°C inkubiert/gespült. Dies entsprach ungefähr fünf bis dreißig BV Puffer (Schritt 2).

Nachfolgend in Schritt 3 wird die Matrix mit einem Bettvolumen (BV) des Harnstoffpuffers (6M), vier BV eines sauren Elutionspuffer (0,1M NaCl, pH 4,0) und sechs BV eines neutralen Puffers (30 mM Tris-HCl, 0,15M NaCl, pH 7 - 8) gespült.

Zur Bestimmung der Protein A*-leakage* im "Inkubationstest" wird eine Probe an Protein-A Sepharose einer entsprechend vorbehandelten Matrix entnommen und mit einem Volumen einer spezifischen Probe über eine bestimmte Zeit inkubiert. Vorliegend wurde Zellkulturmedium als Probe verwendet. Denkbar ist aber auch die Verwendung von saurem Elutionspuffer oder einem beliebigen Puffer. Anschließend wurde die Protein A-Matrix durch Zentrifugation (5 min., 13000 rpm, Eppendorf Rotor F45-24-11) abgetrennt. Das Protein *A-leakage* wurde nun über die Menge an Protein A in der Probe bestimmt (s.u.).

Alternativ erfolgt die Bestimmung der Protein *A-leakage* bei dem *"Small scale* Verfahren" direkt in Anlehnung an das verwendete industrielle Reinigungsverfahren. Hierzu wird die Matrix nach den Behandlungsschritten 1-3 (s.o.) mit einem Beladungspuffer beladen, der wahlweise die zu reinigende Substanz enthält. Anschließend wird die Affinitätsmatrix unter Prozessbedingungen mit einem Waschpuffer (30mM Tris-HCl, 0,15M NaCl, pH 7-8) gewaschen. Nachfolgend erfolgt ein Elutionsschritt mit einem sauren Elutionspuffer (0,1 M NaCl, pH 4,0). Das Eluat wird aufgefangen und die Protein A Menge als Maß für die Protein A*-leakage* bestimmt.

Die Protein A Bestimmung erfolgte in beiden Fällen über einen *"Sandwich Protein* A *ELISA"* der auch geringe Mengen (ppm) an Protein A detektieren kann. Hierzu wurde ein hochaffiner anti-Protein A-Antikörper an ein Reaktionsgefäß, vornehmlich an eine 96-Loch Mikrotiterplatte fixiert. Der Protein A-Nachweis erfolgt nach Inkubation der Probe mit dem fixierten anti-Protein A-Antikörper über einen zweiten, ebenfalls hochaffinen anti-Protein A-Antikörper, der zusätzlich mit einem Enzym, beispielsweise einer Peroxidase oder alkalische Phosphatase markiert ist. Entsprechende unmarkierte und Enzymmarkierte anti-Protein A-Antikörper sind dem Fachmann bekannt und beispielsweise über die Firmen American Research Products, Inc. (Belmont, USA), Biogenesis Ltd. (Poole, England) oder O.E.M. Concepts, Inc. (New Jersey, USA) zu beziehen. Alternativ kann ein kommerzielles Testkit (ELISA) für den Protein A-Nachweis z.B. über die Fa. ReliGen Corp. (Needham, USA) bezogen werden. Die Durchführung des Test erfolgt hierbei entsprechend den Angaben des Herstellers.

### Ergebnisse: Vorbehandlung von Protein A Sepharose zur Reduktion des Protein A-leakage

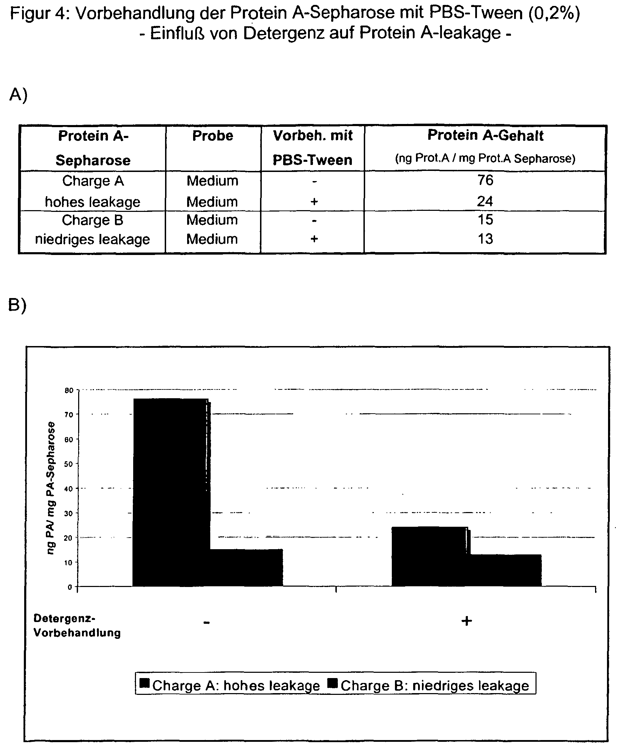

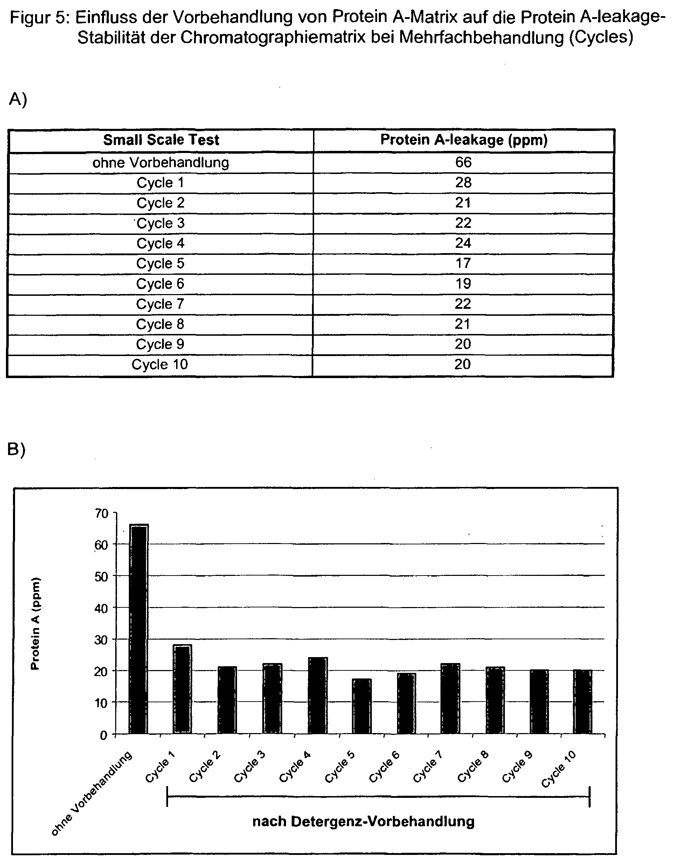

Das Protein A*-leakage* Verhalten einer Protein A-Matrix, die ein hohes Protein *A-leakage* zeigt, kann durch eine kombinierte Vorbehandlung der Affinitätsmatrix mit einem Harnstoff-Puffer, Elutionspuffer, Equilibrierungspuffer und nicht-ionischem Detergenz signifikant reduziert werden (Figur 4). Die gewählte Detergenzkonzentration lag bei 0,2%. Das Protein A*-leakage* Verhalten einer Protein A-Sepharose, die bereits ein niedriges *leakage* vor Behandlung gezeigt hat, bleibt durch die Vorbehandlung unverändert stabil erhalten (Figur 4). Durch die beschriebene Vorbehandlung der Protein A-Matrix wird weder die Aktivität der Affinitätsmatrix noch ihre chromatographische Eigenschaft (Performance) negativ beeinflusst. Die behandelten Protein A-Sepharosen zeigen über mehrere Beladungs- und Elutionszyklen ein stabiles Liganden*-leakage* (Figur 5) und sind bzgl. ihrer Kapazität und Elutionsverhalten unverändert stabil.

### Induktion des Protein A-leakages in Abhängigkeit der Detergenz-Konzentration

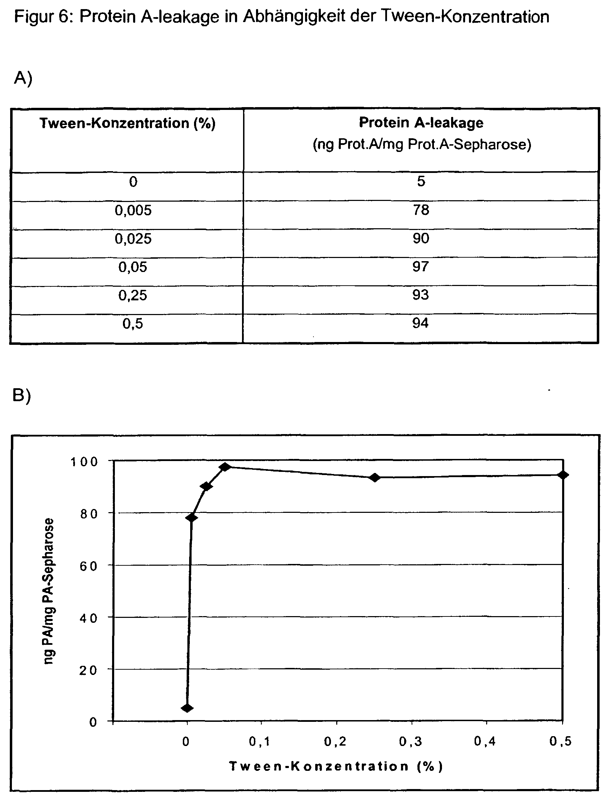

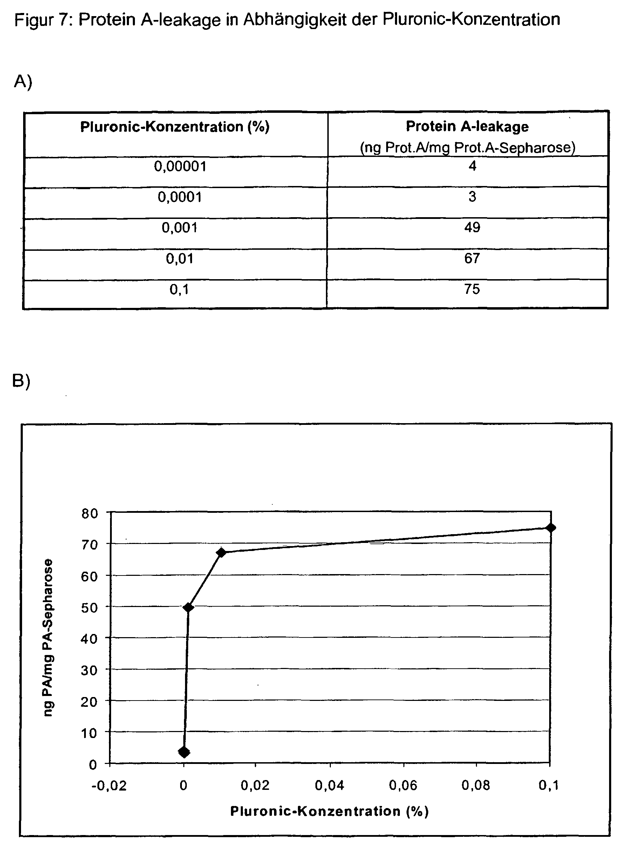

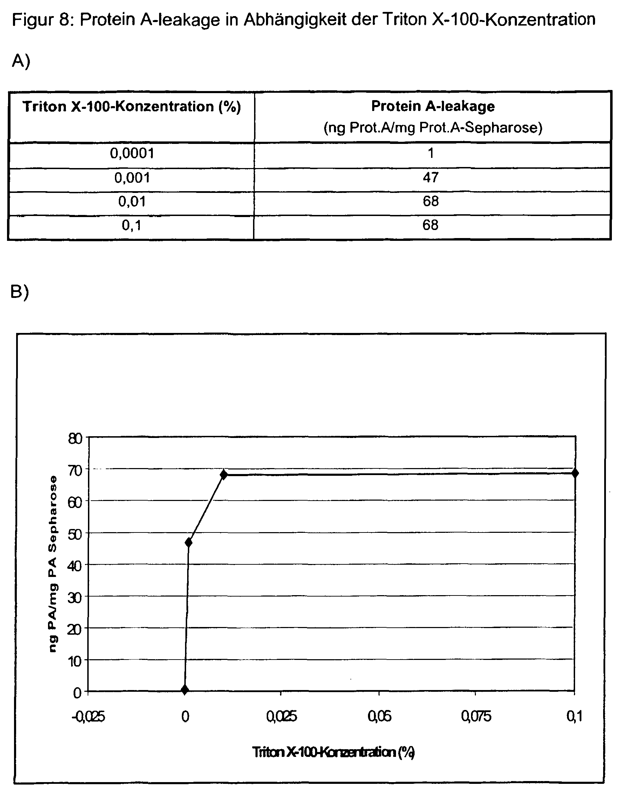

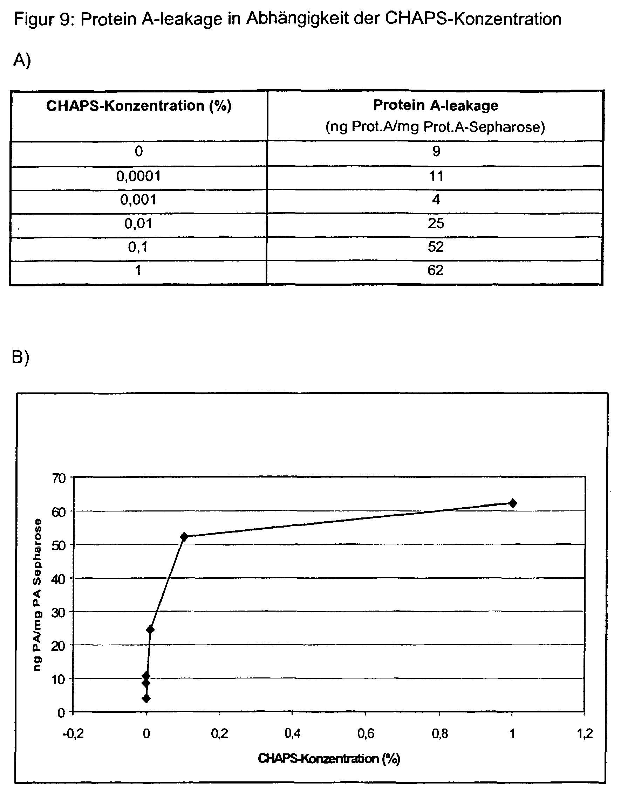

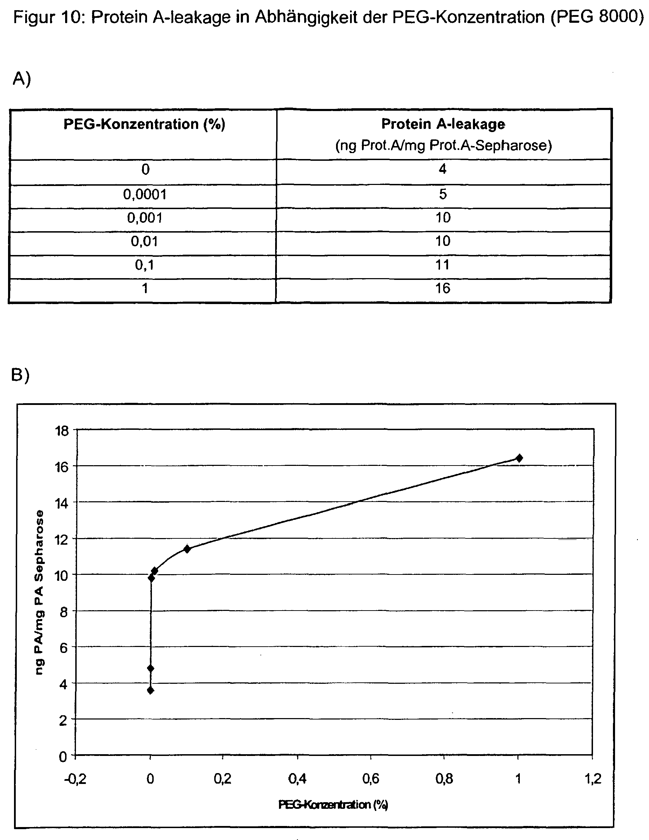

Die Induktion des Protein A*-leakage* ist abhängig von der Konzentration des eingesetzten Detergenz. Der optimale Konzentrationsbereich des eingesetzten Detergenz liegt je nach Substanz zwischen 0,001 -1,0% (siehe Figuren 6 - 10). Die optimale Detergenz-Konzentration wird mit Hilfe des Inkubationstests oder des *Small-scall* Verfahrens oder einem auf einem vergleichbaren Verfahren beruhenden Test für jede Anwendung der Affinitätsmatrix bestimmt.

### Zeitabhängigkeit der Protein A-leakage Reaktion

Die Zeitabhängigkeit der Reaktion/Vorbehandlung der Protein A-Sepharose wurde in Inkubationsversuchen gezeigt. Wird Protein A-Sepharose in Detergenz-haltigem Puffer, beispielsweise in 0,1% Pluronic F68, inkubiert, so ist das *leakage* der Protein A-Sepharose abhängig von der Zeit (Figur 11). Dabei stellte sich überraschenderweise heraus, dass erst eine Behandlungszeit (Kontaktzeit) von mindestens 16 bis 24 Std. zu einer deutlichen Reduktion der Protein *A-leakage* führt. Figur 14 zeigt ferner, dass die Kontaktzeit bei 25°C idealerweise 16 bis 48 Std. beträgt. Erhöht man die Temperatur auf über 25°C, z.B. auf 37°C, so verkürzt sich die erforderliche Behandlungszeit beträchtlich auf mindestens 4 Std., liegt idealerweise bei 4 - 16 Std. Ebenso besteht eine direkte Volumenabhängigkeit der Vorbehandlung der Protein A-Matrix mit Detergenz.

### Temperaturabhängigkeit der Protein A-leakage Reaktion

Die Elution/Induktion des Protein *A-leakage* ist abhängig von der Inkubationstemperatur. Ein Vergleich des Liganden*-leakage* von Protein A-Sepharose in zwei unabhängigen Versuchsserien bei 2-8°C, 25°C (RT) und 37°C bzw. 2-8°C, 37°C, 45°C, 50°C und 55°C zeigt eine direkte Abhängigkeit des Liganden*-leakage* von der Temperatur: je höher die Inkubationstemperatur, desto effektiver kann instabil oder nicht kovalent gebundenes Protein A aus der Affinitätsmatrix herausgelöst werden (Figur 12). Die ideale Inkubationstemperatur für industrielle Anwendungen liegt bei 20 - 25°C (RT). Bei Bedarf kann die Temperatur auch auf 37°C oder darüber hinaus erhöht werden, beispielsweise auf etwa 50°C oder auch auf etwa 55°C, wodurch sowohl die Behandlungsdauer als auch das benötigte Spülvolumen bei Erreichen des gleichen Effekts entsprechend reduziert werden können (vgl. auch Fig. 14).

### Vorbehandlung von verschiedenen Protein-A-Matrices

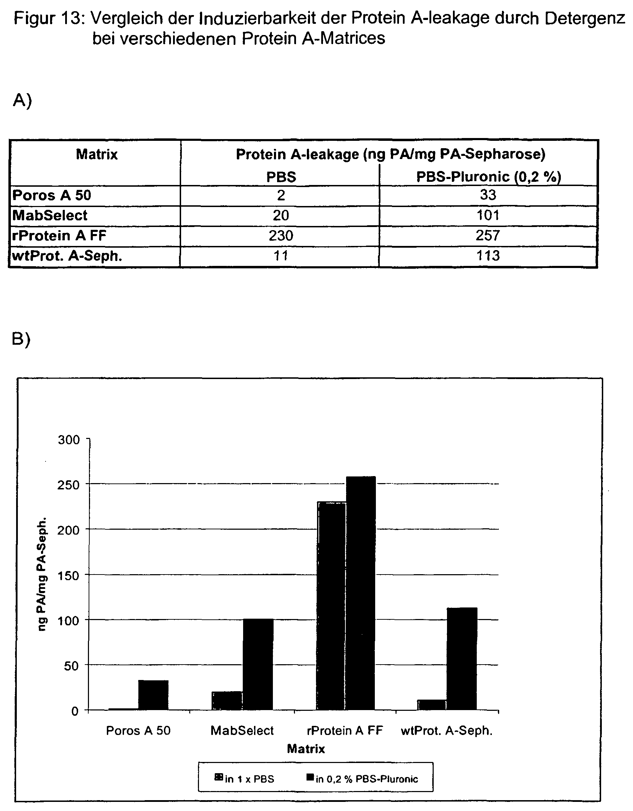

Die Induktion des Protein *A-leakage* zeigt sich für verschiedene Protein A-Matrices (z.B. wildtyp/ rec. Protein A-Sepharose, MabSelect, etc.) nach erfindungsgemäßer Behandlung der Matrices mit Detergenz (Figur 13).

### Literatur

Diamandis, E.P. und Christopoulos, T.K. (1996). Immunoassay, Academic Press.
Duggleby, C.J. und Jones, S.A. (1983), Cloning and expression of Staphylococcus aureus protein A gene in Escherichia coli. Nucl.Acid.Res. 1983 May25; 11(10):3065-76.
Harris und Angel (1989): Protein Purification Methods - A practical approach, IRL. Press, Oxford University Press Inc., New York, 1995.
Kemeny, D.M. (1994). ELISA - Anwendung des Enzyme Linked Immunosorbent Assay im biologisch/medizinischen Labor. Gustav Fischer Verlag.
Li, R. Dowd, V., Stewart, D.J., Burton, S.J. Lowe, C.R. (1998), Design, sythesis and application of a protein A mimetic. Nat.Biotechnol. 1998 Feb; 16(2):190-5.
Lindmark, R., Thoren-Tolling, K., Sjoquist J (1983); Bindirig of immunoglobulin to protein A and immunoglobulin levels in mammalian sera: J Immunol Methods 1983 Aug 12;62(11):1-13.
Lofdahl, S., Guss, B., Uhlen, M., Philipson, L., Lindberg, M. (1983), Gene for staphylococcal protein A. PNAS, USA, Feb; 80(3):697-701

## Patentansprüche

1. Verfahren zur Behandlung einer Affinitätschromatographie-Matrix, die eine Protein A-Matrix ist, zur Verringerung der Liganden-*leakage* mit mindestens einem nicht-ionischem oder ionischem Detergenz einschließlich eines zwitterionischen Detergenzes , **dadurch gekennzeichnet, dass** die Kontaktzeit mindestens 16 Std. beträgt, dass die die Verfahrenstemperatur zwischen 15 und 25°C beträgt, und dass die Affinitätschromatographie-Matrix zusätzlich mit einer chaotropen Substanz behandelt wird.

2. Verfahren gemäß Anspruch 1, **dadurch gekennzeichnet, dass** die Kontaktzeit zwischen 16 und 48 Std. beträgt.

3. Verfahren gemäß einer der Ansprüche 1 -oder 2, **dadurch gekennzeichnet, dass** die Affinitätschromatographie-Matrix mit mindestens 5 - 10 Bettvolumen des Detergenzes oder der Detergenzien gespült wird.

4. Verfahren gemäß einem der Ansprüche 1 bis 3, **dadurch gekennzeichnet, dass** die Affinitätschromatographie-Matrix zusätzlich mit einem für die Affinitätsmatrix stringenten Elutionspuffer behandelt wird.

5. Verfahren gemäß Anspruch 4 **dadurch gekennzeichnet, dass** die Affinitätschromatographie-Matrix zusätzlich mit einem neutralen Puffer (pH 6,5 - 8,5) behandelt wird.

6. Verfahren nach einem der Ansprüche 1 - 5 **dadurch gekennzeichnet, dass** es sich bei der chaotropen Substanz um Harnstoff oder Guanidinhydrochlorid handelt.

7. Verfahren gemäß Anspruch 6, wobei Harnstoff oder Guanidinhydrochlorid in einer Konzentration von 4 - 6 M verwendet wird.

8. Verfahren nach einem der Ansprüche 4 - 7, wobei es sich bei dem Elutionspuffer um einen sauren Elutionspuffer handelt (pH 2,0 - 4,0).

9. Verfahren zur Behandlung einer Affinitätschromatographie-Matrix, die eine Protein A-Matrix ist, nach einem der vorherigen Ansprüchen mit den Schritten:
a) Vorbehandlung der Affinitätschromatographie-Matrix mit einer chaotropen Substanz, gefolgt von einem sauren Puffer (pH 2,0 - 4,0) und einem neutralen Puffer (pH 6,5 - 8,5)
b) Behandlung der Affinitätschromatographie-Matrix mit mindestens 5 - 10 Bettvolumen zumindest eines Detergenzes für mindestens 16 Std. bei einer Verfahrenstemperatur von 15 bis 25°C.
c) Nachbehandlung der Affinitätschromatographie-Matrix mit einer chaotrophen Substanz, gefolgt von einem sauren Puffer (pH 2,0 - 4,0) und einem neutralen Puffer (pH 6,5 - 8,5).

10. Verfahren nach einem der Ansprüche 1 - 9, wobei es sich bei dem Detergenz oder den Detergentien um ein PEG-Alkylether, ein PEG-Sorbitanfettsäureester, ein Alkylphenyl-PEG-Ether, ein PEO-PPO-Block-Co-Polymere oder um Polyethylenglycol handelt.

11. Verfahren nach einem der Ansprüche 1 - 9, wobei es sich bei dem Detergenz oder den Detergentien mindestens um eine der folgenden Substanzen:
- ein PEG-Alkylether wie Polyoxyethylene(23)laurylether (Brij 35) oder Polyoxyl-20-cetostearylether,
- ein PEG-Sorbitanfettsäureester (Polysorbat-Derivat) wie etwa Polyoxyethylen(20) sorbitan-monolaurat (Polysorbat 20) oder Polyoxyethylen(20)sorbitanmonooleat (Polysorbat 80),
- ein Alkylphenyl-PEG-Ether (Octoxynol-Derivat) wie etwa t-Octylphenoxypolyethoxyethanol (Triton-X-100),
- ein Nonylphenol Polyoxyethylenether wie etwa Polyglycolether (Tergitol NP40) oder ein verzweigter Polyoxyethylen-nonylcyclohexylether (Triton N-101),
- ein PEO-PPO-Block-Co-Polymere (Poloxamer-Derivate), wie Polyoxyethylen-polyoxypropylen-block-copolymer (Pluronic F 68, Lutrol F 68, Poloxamer 188, oder Pluronic F 127, Lutrol F 127, Poloxamer 407),
- ein Polyethylenglycol
handelt.

12. Verfahren nach einem der Ansprüche 1 - 9, wobei es sich bei dem Detergenz zumindest um 3-(3-Cholamidopropyl)-dimethylammonio-1-propansulfonat (CHAPS), oder um 3-(3-Cholamidopropyl)-dimethyl-ammonio-2-hydroxy-1-propansulfonat (CHAPSO) handelt.

13. Verfahren gemäß einem der Ansprüche 1 - 12, wobei das Detergenz oder die Detergentien in einer Konzentration von 0,001 bis 5% (v/v) eingesetzt wird (werden).

14. Verfahren gemäß einem der Ansprüche 1 - 11, wobei Polyoxyethylen(20)sorbitan-monolaurat (Polysorbat 20) oder Polyoxyethylen(20)sorbitan-monooleat (Polysorbat 80), in einer Konzentration > 0,001 % (v/v), Polyoxyethylen-polyoxypropylen-block-copolymer (Pluronic F 68, Lutrol F 68, Poloxamer 188, oder Pluronic F 127, Lutrol F 127, Poloxamer 407), t-Octylphenoxy-polyethoxyethanol (Triton-X-100) oder Polyethylenglycol in einer Konzentration von > 0,001 % (v/v) eingesetzt wird.

15. Verfahren gemäß einem der Ansprüche 1 - 11, wobei Polyoxyethylen(20)sorbitan-monolaurat (Polysorbat 20) oder Polyoxyethylen(20)sorbitan-monooleat (Polysorbat 80) in einer Konzentration von 0,001 - 0,5 % (v/v), Polyoxyethylen-polyoxypropylen-block-copolymer (Pluronic F 68, Lutrol F 68, Poloxamer 188 oder Pluronic F 127, Lutrol F 127, Poloxamer 407,) und t-Octyl-phenoxypolyethoxyethanol (Triton-X-100) in einer Konzentration von 0,001 - 0,1% (v/v) eingesetzt wird und Polyethylenglycol in einer Konzentration von 0,001 - 1% (v/v) eingesetzt wird.

16. Verfahren gemäß der einer der Ansprüche 1 - 9 sowie Anspruch 12, wobei das zwitterionische Detergenz in einer Konzentration von 0,01 bis 5% eingesetzt wird.

17. Verfahren gemäß einem der Ansprüche 1 - 9 sowie Anspruch 12, wobei 3-(3-Cholamidopropyl)-dimethylammonio-1-propansulfonat (CHAPS) oder 3-(3-Cholamidopropyl)-dimethyl-ammonio-2-hydroxy-1-propansulfonat (CHAPSO) in einer Konzentration > 0,01% (v/v) eingesetzt werden.

18. Verfahren gemäß der Ansprüche 1 - 9 sowie Anspruch 12, wobei 3-(3-Cholamidopropyl)-dimethylammonio-1-propansulfonat (CHAPS) oder 3-(3-Cholamido-propyl)-dimethyl-ammonio-2-hydroxy-1-propansulfonat (CHAPSO) in einer Konzentration von 0,01 - 1% (v/v) eingesetzt werden.

19. Verfahren gemäß einem der Ansprüche 1 bis 18, wobei die Protein A-Matrix immobilisiertes wildtyp oder rekombinant hergestelltes Protein A enthält.

20. Verfahren gemäß Anspruch 19, wobei es sich bei der Affinitätschromatographie-Matrix um Protein A handelt, das an Agarose, oder an ein Polysaccharid, oder an Dextran, oder an Silica-Gel, oder an Glas-beads gekoppelt ist.

21. Verfahren gemäß Anspruch 20, wobei es sich bei der Affinitätschromatographie-Matrix um Protein A-Sepharose handelt.

22. Verfahren gemäß einem der Ansprüche 1 - 21, **dadurch gekennzeichnet, dass** die Liganden-*leakage* nach entsprechender Vorbehandlung auf einen Wert kleiner 80 ng /mg Affinitätsmatrix verringert wird.

23. Verfahren gemäß einem der Ansprüche 1 - 21, **dadurch gekennzeichnet, dass** die Liganden-*leakage* nach entsprechender Vorbehandlung auf einen Wert kleiner 40 ng/mg Affinitätsmatrix verringert wird.

24. Verfahren gemäß einem der Ansprüche 1 - 21, **dadurch gekennzeichnet, dass** die Liganden-*leakage* nach entsprechender Vorbehandlung auf einen Wert kleiner 20 ng/mg Affinitätsmatrix verringert wird.

25. Verfahren gemäß einem der Ansprüche 1 - 21, **dadurch gekennzeichnet, dass** die Liganden-*leakage* nach entsprechender Vorbehandlung auf einen Wert kleiner 10 ng/mg Affinitätsmatrix verringert wird.

## Claims

1. Process for treating an affinity chromatography matrix which is a protein A matrix with at least one non-ionic or ionic detergent, including a zwitterionic detergent, in order to reduce the ligand leakage, **characterised in that** the contact time is at least 16 hours, the process temperature is between 15 and 25°C, and the affinity chromatography matrix is additionally treated with a chaotropic substance.

2. Process according to claim 1, **characterised in that** the contact time is between 16 and 48 hours.

3. Process according to one of claims 1 or 2, **characterised in that** the affinity chromatography matrix is rinsed with at least 5 - 10 bed volumes of the detergent or detergents.

4. Process according to one of claims 1 to 3, **characterised in that** the affinity chromatography matrix is additionally treated with an elution buffer which is stringent for the affinity matrix.

5. Process according to claim 4, **characterised in that** the affinity chromatography matrix is additionally treated with a neutral buffer (pH 6.5 - 8.5).

6. Process according to one of claims 1 to 5, **characterised in that** the chaotropic substance is urea or guanidine hydrochloride.

7. Process according to claim 6, wherein urea or guanidine hydrochloride is used in a concentration of 4 - 6 M.

8. Process according to one of claims 4 - 7, wherein the elution buffer is an acidic elution buffer (pH 2.0 - 4.0).

9. Process for treating an affinity chromatography matrix which is a protein A matrix according to one of the preceding claims, comprising the steps of:
a) pretreating the affinity chromatography matrix with a chaotropic substance, followed by an acidic buffer (pH 2.0 - 4.0), and a neutral buffer (pH 6.5 - 8.5);
b) treating the affinity chromatography matrix with at least 5 - 10 bed volumes of at least one detergent for at least 16 hours at a process temperature of 15 to 25°C.
c) subsequently treating the affinity chromatography matrix with a chaotropic substance, followed by an acidic buffer (pH 2.0 - 4.0) and a neutral buffer (pH 6.5 - 8.5).

10. Process according to one of claims 1 - 9, wherein the detergent or detergents is or are a PEG-alkylether, a PEG-sorbitan fatty acid ester, an alkylphenyl-PEG-ether, a PEO-PPO block copolymer or a polyethyleneglycol.

11. Process according to one of claims 1 - 9, wherein the detergent or detergents is or are at least one of the following substances:
- a PEG-alkylether such as polyoxyethylene(23)laurylether (Brij 35) or polyoxyl-20-cetostearylether,
- a PEG-sorbitan fatty acid ester (Polysorbate derivative) such as for example polyoxyethylene(20) sorbitan-monolaurate (Polysorbate 20) or polyoxyethylene(20)sorbitan monooleate (Polysorbate 80),
- an alkylphenyl-PEG ether (octoxynol derivative) such as for example t-octylphenoxy-polyethoxyethanol (Triton-X-100),
- a nonylphenol polyoxyethylene ether such as for example polyglycolether (Tergitol NP40) or a branched polyoxyethylene-nonylcyclohexyl ether (Triton N-101),
- a PEO-PPO block copolymer (Poloxamer derivatives), such as polyoxyethylene-polyoxypropylene block copolymer (Pluronic F 68, Lutrol F 68, Poloxamer 188, or Pluronic F 127, Lutrol F 127, Poloxamer 407),
- a polyethyleneglycol.

12. Process according to one of claims 1 - 9, wherein the detergent is at least 3-(3-cholamidopropyl)-dimethylammonio-1-propanesulphonate (CHAPS), or 3-(3-cholamidopropyl)-dimethyl-ammonio-2-hydroxy-1-propanesulphonate (CHAPSO).

13. Process according to one of claims 1 - 12, wherein the detergent or detergents is or are used in a concentration of 0.001 to 5% (v/v).

14. Process according to one of claims 1 - 11, wherein polyoxyethylene(20)sorbitan-monolaurate (Polysorbate 20) or polyoxyethylene(20)sorbitan-monooleate (Polysorbate 80), is used in a concentration of >0.001 % (v/v), and polyoxyethylene-polyoxypropylene block copolymer (Pluronic F 68, Lutrol F 68, Poloxamer 188, or Pluronic F 127, Lutrol F 127, Poloxamer 407), t-octylphenoxy-polyethoxyethanol (Triton-X-100) or polyethyleneglycol is used in a concentration of >0.001 % (v/v).

15. Process according to one of claims 1 - 11, wherein polyoxyethylene(20)sorbitan-monolaurate (Polysorbate 20) or polyoxyethylene(20)sorbitan-monooleate (Polysorbate 80) is used in a concentration of 0.001 - 0.5 % (v/v), polyoxyethylene-polyoxypropylene block copolymer (Pluronic F 68, Lutrol F 68, Poloxamer 188 or Pluronic F 127, Lutrol F 127, Poloxamer 407,) and t-octyl-phenoxypolyethoxyethanol (Triton-X-100) is used in a concentration of 0.001 - 0.1% (v/v) and polyethyleneglycol is used in a concentration of 0.001 - 1% (v/v).

16. Process according to one of claims 1 - 9 and claim 12, wherein the zwitterionic detergent is used in a concentration of 0.01 to 5%.

17. Process according to one of claims 1 - 9 and claim 12, wherein 3-(3-cholamidopropyl)-dimethylammonio-1-propanesulphonate (CHAPS) or 3-(3-cholamidopropyl)-dimethyl-ammonio-2-hydroxy-1-propanesulphonate (CHAPSO) are used in a concentration > 0.01% (v/v).

18. Process according to claims 1 - 9 and claim 12, wherein 3-(3-cholamidopropyl)-dimethylammonio-1-propanesulphonate (CHAPS) or 3-(3-cholamido-propyl)-dimethyl-ammonio-2-hydroxy-1-propanesulphonate (CHAPSO) are used in a concentration of 0.01 - 1% (v/v).

19. Process according to one of claims 1 to 18, wherein the protein A matrix contains immobilised wild-type or recombinantly prepared protein A.

20. Process according to claim 19, wherein the affinity chromatography matrix is protein A, which is coupled to agarose, or to a polysaccharide, or to dextran, or to silica gel, or to glass beads.

21. Process according to claim 20, wherein the affinity chromatography matrix is protein A sepharose.

22. Process according to one of claims 1 - 21, **characterised in that** the ligand leakage is reduced to a level of less than 80 ng /mg affinity matrix after corresponding pretreatment.

23. Process according to one of claims 1 - 21, **characterised in that** the ligand leakage is reduced to a level of less than 40 ng /mg affinity matrix after corresponding pretreatment.

24. Process according to one of claims 1 - 21, **characterised in that** the ligand leakage is reduced to a level of less than 20 ng /mg affinity matrix after corresponding pretreatment.

25. Process according to one of claims 1 - 21, **characterised in that** the ligand leakage is reduced to a level of less than 10 ng /mg affinity matrix after corresponding pretreatment.

## Revendications

1. Procédé de traitement d'une matrice de chromatographie d'affinité, qui est une matrice de protéine A, pour la réduction de la fuite des ligands comprenant au moins un détergent non ionique ou ionique, y compris un détergent zwitterionique, **caractérisé en ce que** le temps de mise en contact est d'au moins 16 heures, **en ce que** la température du procédé se situe entre 15 et 25 °C et **en ce que** la matrice de chromatographie d'affinité est traitée en plus avec une substance chaotrope.

2. Procédé selon la revendication 1, **caractérisé en ce que** le temps de mise en contact est situé entre 16 et 48 heures.

3. Procédé selon l'une des revendications 1 ou 2, **caractérisé en ce que** la matrice de chromatographie d'affinité est rincée avec au moins 5 à 10 volumes de lit du détergent ou des détergents.

4. Procédé selon l'une des revendications 1 à 3, **caractérisé en ce que** la matrice de chromatographie d'affinité est traitée en plus avec un tampon d'élution stringent pour la matrice d'affinité.

5. Procédé selon la revendication 4, **caractérisé en ce que** la matrice de chromatographie d'affinité est traitée en plus avec un tampon neutre (pH 6,5 à 8,5).

6. Procédé selon l'une des revendications 1 à 5, **caractérisé en ce que** la substance chaotrope est l'urée ou le chlorhydrate de guanidine.

7. Procédé selon la revendication 6, dans lequel l'urée ou le chlorhydrate de guanidine est utilisé(e) en une concentration de 4 à 6 M.

8. Procédé selon l'une des revendications 4 à 7, le tampon d'élution étant un tampon d'élution acide (pH 2, 0 à 4, 0) .

9. Procédé de traitement d'une matrice de chromatographie d'affinité, qui est une matrice de protéine A, selon l'une des revendications précédentes, comprenant les étapes consistant à :
a) prétraiter la matrice de chromatographie d'affinité avec une substance chaotrope, puis avec un tampon acide (pH 2,0 à 4,0) et un tampon neutre (pH 6,5 à 8,5)
b) traiter la matrice de chromatographie d'affinité avec au moins 5 à 10 volumes du lit d'au moins un détergent pendant au moins 16 heures à une température de procédé de 15 à 25 °C
c) post-traiter la matrice de chromatographie d'affinité avec une substance chaotrope, puis avec un tampon acide (pH 2,0 à 4,0) et un tampon neutre (pH 6,5 à 8,5).

10. Procédé selon l'une des revendications 1 à 9, le détergent ou les détergents étant un alkyléther de PEG, un ester d'acide gras de PEG-sorbitan, un alkylphényléther de PEG, un copolymère à blocs de PEO-PPO ou un polyéthylène glycol.

11. Procédé selon l'une des revendications 1 à 9, le détergent ou les détergents étant au moins l'une des substances suivantes :
- un alkyléther de PEG tel que le lauryléther de polyoxyéthylène(23) (Brij 35) ou le kéto-stéaryléther de polyoxyle-20,
- un ester d'acide gras de PEG-sorbitan (dérivé du Polysorbat) tel que par exemple le monolaurate de polyoxyéthylène(20)-sorbitan (Polysorbat 20) ou le monooléate de polyoxyéthylène(20)-sorbitan (Polysorbat 80),
- un alkylphényléther de PEG (dérivé d'octoxynol) tel que par exemple le t-octylphénoxypolyéthoxyéthanol (Triton-X-100),
- un nonylphénoléther de polyoxyéthylène tel que par exemple le polyglycoléther (Tergitol NP40) ou un nonylcyclohexyléther de polyoxyéthylène ramifié (Triton N-101),
- un copolymère à blocs de PEO-PPO (dérivés du Poloxamer) tel que le copolymère à blocs de polyoxyéthylène - polyoxypropylène (Pluronic F 68, Lutrol F 68, Poloxamer 188 ou Pluronic F 127, Lutrol F 127, Poloxamer 407),
- un polyéthylène glycol.

12. Procédé selon l'une des revendications 1 à 9, le détergent étant au moins le 3-(3-cholamidopropyl)-diméthylammonio-1-propanesulfonate (CHAPS) ou le 3-(3-cholamidopropyl)-diméthylammonio-2-hydroxy-1-propanesulfonate (CHAPSO).

13. Procédé selon l'une des revendications 1 à 12, le détergent ou les détergents étant mis en oeuvre en une concentration de 0,001 à 5 % (v/v).

14. Procédé selon l'une des revendications 1 à 11, le monolaurate de polyoxyéthylène(20)-sorbitan (Polysorbat 20) ou le monooléate de polyoxyéthylène(20)-sorbitan (Polysorbat 80) étant mis en oeuvre en une concentration > 0,001 % (v/v), le copolymère à blocs de polyoxyéthylène - polyoxypropylène (Pluronic F 68, Lutrol F 68, Poloxamer 188 ou Pluronic F 127, Lutrol F 127, Poloxamer 407), le t-octylphénoxypolyéthoxyéthanol (Triton-X-100) ou le polyéthylène glycol étant mis en oeuvre en une concentration > 0,001 % (v/v).

15. Procédé selon l'une des revendications 1 à 11, le monolaurate de polyoxyéthylène(20)-sorbitan (Polysorbat 20) ou le monooléate de polyoxyéthylène(20)-sorbitan (Polysorbat 80) étant mis en oeuvre en une concentration de 0,001 % à 0,5 % (v/v), le copolymère à blocs de polyoxyéthylène - polyoxypropylène (Pluronic F 68, Lutrol F 68, Poloxamer 188 ou Pluronic F 127, Lutrol F 127, Poloxamer 407) et le t-octylphénoxypoly-éthoxyéthanol (Triton-X-100) étant mis en oeuvre en une concentration de 0,001 % à 0,1 % (v/v), et le polyéthylène glycol étant mis en oeuvre en une concentration de 0,001 % à 1 % (v/v).

16. Procédé selon l'une des revendications 1 à 9 et selon la revendication 12, le détergent zwitterionique étant mis en oeuvre en une concentration de 0,01 à 5 %.

17. Procédé selon l'une des revendications 1 à 9 et selon la revendication 12, le 3-(3-cholamidopropyl)-diméthylammonio-1-propanesulfonate (CHAPS) ou le 3-(3-cholamidopropyl)-diméthylammonio-2-hydroxy-1-propanesulfonate (CHAPSO) étant mis en oeuvre en une concentration > 0,01 % (v/v).

18. Procédé selon l'une des revendications 1 à 9 et selon la revendication 12, le 3-(3-cholamidopropyl)-diméthylammonio-1-propanesulfonate (CHAPS) ou le 3-(3-cholamidopropyl)-diméthylammonio-2-hydroxy-1-propanesulfonate (CHAPSO) étant mis en oeuvre en une concentration de 0,01 à 1 % (v/v).

19. Procédé selon l'une des revendications 1 à 18, la matrice de protéine A contenant une protéine A immobilisée de type sauvage ou bien produite de manière recombinante.

20. Procédé selon la revendication 19, la matrice de chromatographie d'affinité étant une protéine A qui est couplée à la gélose ou à un polysaccharide ou au dextrane ou au gel de silice ou à des billes de verre.

21. Procédé selon la revendication 20, la matrice de chromatographie d'affinité étant une protéine A-sépharose.

22. Procédé selon l'une des revendications 1 à 21, **caractérisé en ce que** la fuite des ligands après prétraitement correspondant est réduite à une valeur inférieure à 80 ng/mg de matrice d'affinité.

23. Procédé selon l'une des revendications 1 à 21, **caractérisé en ce que** la fuite des ligands après prétraitement correspondant est réduite à une valeur inférieure à 40 ng/mg de matrice d'affinité.

24. Procédé selon l'une des revendications 1 à 21, **caractérisé en ce que** la fuite des ligands après prétraitement correspondant est réduite à une valeur inférieure à 20 ng/mg de matrice d'affinité.

25. Procédé selon l'une des revendications 1 à 21, **caractérisé en ce que** la fuite des ligands après prétraitement correspondant est réduite à une valeur inférieure à 10 ng/mg de matrice d'affinité.
